# EUROPÄISCHE PATENTANMELDUNG

(11) **EP 1 348 358 A2**
(43) Veröffentlichungstag der Anmeldung: **01.10.2003**
(21) Anmeldenummer: 03004780.7
(22) Anmeldetag: 05.03.2003
(51) Int. Cl.: A47C 23/14

(54) **Matratze mit einem Kern aus einer Mehrzahl von Federelementen**

(30) Priorität: 26.03.2002 DE 20204740 U
(71) Anmelder: Recticel Schlafkomfort GmbH, 59439 Holzwickede (DE)
(72) Erfinder: Lantzsch, Hans, 44328 Dortmund (DE)
(74) Vertreter: Patentanwälte Meinke, Dabringhaus und Partner

(57) **Zusammenfassung**

Eine Matratze (1) mit einem Kern (2) aus einer Mehrzahl von Federelementen (4), wobei jedes Federelement (4) als im wesentlichen kreisförmig oder oval gebogenes, umlaufendes endloses Band aus einem ein Federverhalten aufweisenden Kunststoff gebildet ist, soll einfach in der Herstellung, hoch im Liegekomfort und gering im Gewicht sein, was dadurch erreicht wird, daß jedes Federelement (4) mit zwei nach innen weisenden Fixierungen (6) zur Aufnahme von Kopplungsstangen (3) oder -rohren versehen ist, wobei zur Bildung des Matratzenkernes (2) die Federelemente (4) in abwechselnder Folge auf je zwei Kopplungsstangen (3) aufgesteckt sind.

## Beschreibung

Die Erfindung richtet sich auf eine Matratze mit einem Kern aus einer Mehrzahl von Federelementen, wobei jedes Federelement als im wesentlichen kreisförmig oder oval gebogenes, umlaufendes endloses Band aus einem ein Federverhalten aufweisenden Kunststoff gebildet ist.

Es gibt eine Reihe von unterschiedlichen Arten, die Kerne von Matratzen zu gestalten. Dabei ist es insbesondere bekannt, sogenannte Taschenfederkerne auszubilden, bei denen die nebeneinander angeordneten Federn Ketten miteinander bilden, wobei eine Kette aus Federkernen in die von den Federkernen benachbarten Randlücken der Nachbarkette eingreift, d.h. die einzelnen Federn sind in Form des halben Maßes ihres Durchmessers gegeneinander versetzt. Lediglich als Beispiel seien hier die WO 92/03077-A1, die EP-0 694 272-B oder die DE-40 31 654-A genannt.

Neben diesen Taschenfederkernen mit in der Regel metallischen Federn ist auch schon ein Kern einer Polsterauflage oder Matratze vorgeschlagen worden mit einem im wesentlichen ringförmigen Biegefederelement, und zwar in der EP-1 153 558-A2, ohne daß dort Einzelheiten der Verkettung dieser dort offenbarten Biegefederelemente beschrieben sind. Weitere derartige Matratzengestaltungen zeigen die DE-298 22 747-U, DE-100 23 466-A, EP-0 223 617-B, EP-0 653 174-A oder die US-3 618 144, um nur einige Beispiele zu nennen.

Gestaltungen von Bettrahmen unter Einsatz von ovalen oder etwa kreisförmigen Federelementen aus bandförmigem Material zeigen das DE-299 19 967-U der Anmelderin oder die DE-610 708-C, DE-196 37 933-C, DE-199 30 215-C oder die WO-00/67 618-A.

Ausgehend von kreisförmigen oder ovalen Federelementen ist es Aufgabe der Erfindung, eine Matratze mit einem Kern zu schaffen, der einfach in der Herstellung, hoch im Liegekomfort und gering im Gewicht ist.

Mit einer Matratze der eingangs bezeichneten Art wird diese Aufgabe gemäß der Erfindung dadurch gelöst, daß jedes Federelement mit zwei nach innen weisenden Fixierungen zur Aufnahme von Kopplungsstangen oder -rohren versehen ist, wobei zur Bildung des Matratzenkernes die Federelemente in abwechselnder Folge auf je zwei Kopplungsstangen aufgesteckt sind.

Aus einer gegenüber dem gattungsbildenden Stand der Technik älteren Anmeldung der Anmelderin, EP-1 099 237-A1, ist ein Bettrahmen bekannt, der eine Vielzahl von Federelementen aufweist, die auf stangenförmigen Querträgern aufschiebbar oder aufclipsbar sind, d.h. sie können vom Benutzer nachträglich problemlos umgetauscht oder gegen ein anderes Federverhalten aufweisende Federelemente ausgetauscht werden, was ein Ziel der dort offenbarten Erfindung ist.

Demgegenüber sind die Federelemente nach der vorliegenden Erfindung mit innen liegenden Fixierungen zur Aufnahme von Kopplungsstangen versehen, woraus sich ergibt, daß die Federelemente vergleichsweise dicht gepackt werden können und eine derartig ausgestaltete Matratze von beiden Seiten benutzbar ist, ohne daß zur Montage dienende Elemente den Liegekomfort stören würden.

Ein weiterer Vorteil der erfindungsgemäßen Matratze liegt u.a. darin, daß sie antiallergisch ist und nicht magnetisierbar, was bei Federkernmatratzen häufig der Fall ist.

Ausgestaltungen der Erfindung ergeben sich aus den Unteransprüchen, wobei eine Weiterbildung des Erfindungsgedankens darin besteht, daß die Fixierungen als die Kopplungsstangen umschließende Rohrkörper ausgebildet sind.

Grundsätzlich können die Fixierungen auch als Clipse ausgebildet sein. Da eine Matratze aber in der Regel eine geschlossene Außenhülle aufweist, bieten sich Rohrkörper zur verlierungsfreien Auffädelung hier als einfache Lösung besonders an.

Bei einem querschnittlich ovalen Federkörper sind erfindungsgemäß die Fixierungen etwa in den Ellypsenbrennpunkten vorgesehen.

Vorteilhaft ist es, wenn die Breite des den Federkörper bildenden Kunststoffbandes von der Mitte des Bereiches größten Krümmungsradius bis zur Mitte des Bereiches kleineren Radius abnimmt, was bedeutet, daß in den für das Federverhalten wichtigen Außenrandbereich das Kunststoffband schmal und im Auflagebereich, d.h. in der Matratzenfläche, besonders breit ist. Da die Federkörper in der Regel gegeneinander versetzt paarweise auf Stangenpaaren aufgefädelt sind, ergibt sich aus dieser Gestaltung eine besonders gute Ausbildung der Matratzenoberfläche.

Schließlich kann vorgesehen sein, daß die Fixierungen in ihrer Längsausdehnung der größten Bandbreite des Federbandes entsprechen.

Weitere Merkmale, Einzelheiten und Vorteile der Erfindung ergeben sich aufgrund der nachfolgenden Beschreibung sowie anhand der Zeichnung. Diese zeigt in
- Fig. 1 und 2: Aufsicht und Seitenansicht einer erfindungsgemäßen Matratze in vereinfachter Darstellung,
- Fig. 3: die Aufsicht auf einen Teil einer erfindungsgemäßen Matratze,
- Fig. 4: die Seitenansicht etwa gemäß Pfeil IV in Fig. 3,
- Fig. 5: eine räumliche Darstellung eines einzelnen Federelementes sowie in den
- Fig. 6, 7 und 8: Ansichten gemäß der Pfeile VI bis VIII in Fig. 5.

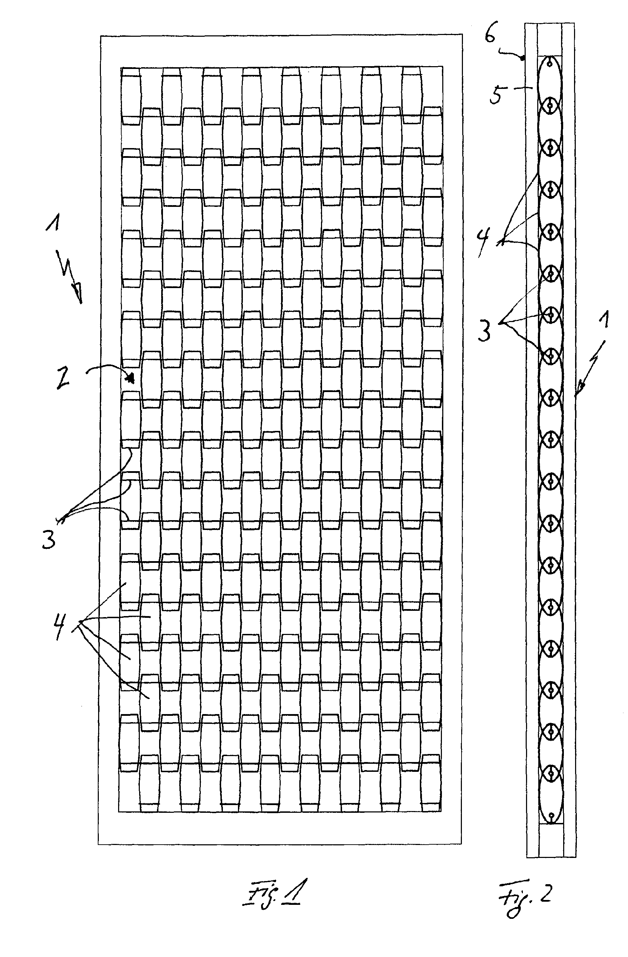

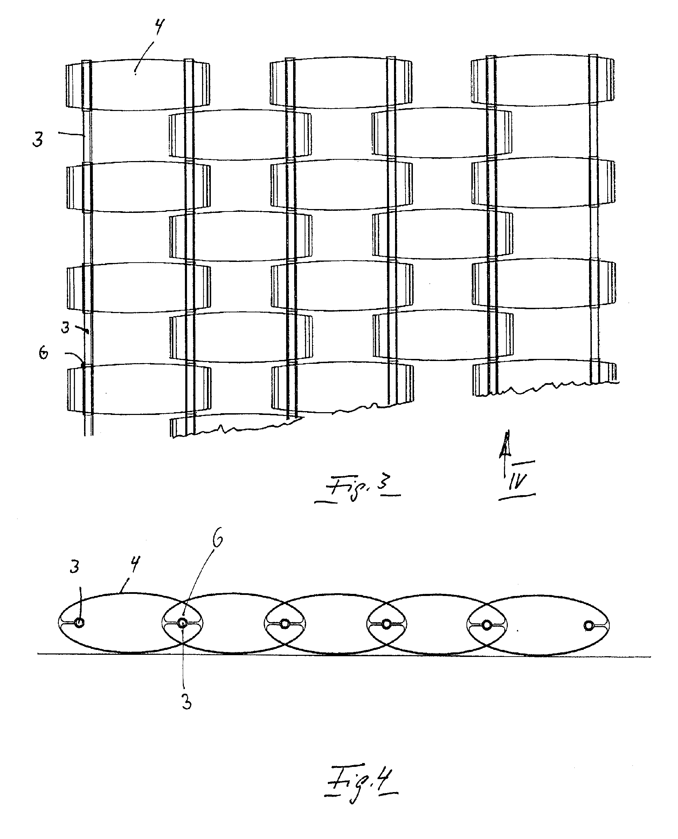

Die in den Fig. 1 und 2 vereinfacht wiedergegebene Matratze, allgemein mit 1 bezeichnet, weist einen Matratzenkern 2 auf, der von einer Vielzahl von parallel angeordneten Kopplungsstangen oder -rohren 3 gebildet ist, auf denen jeweils abwechselnd paarweise allgemein mit 4 bezeichnete Federelemente aufgefädelt sind, wobei der Matratzenkern 3 in entsprechender Weise von einem Polstermaterial 5 und einer entsprechenden, nicht näher dargestellten textilen Umhüllung 6 umgeben ist.

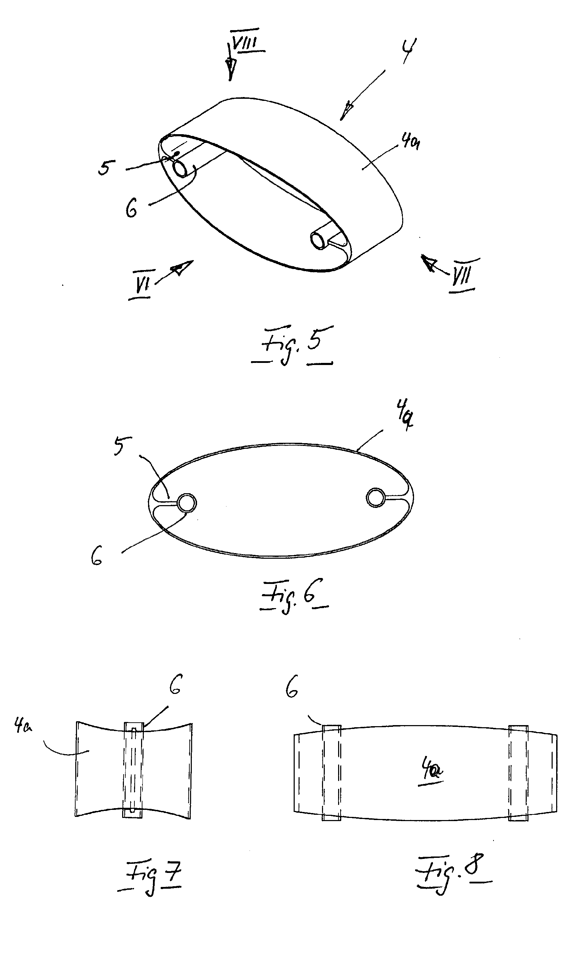

In den Fig. 3 und 4 sind im größeren Maßstab die Federelemente 4 aufgefädelt auf den Kopplungsstangen bzw. -rohren 3 dargestellt, wobei sich aus diesen Darstellungen die Verkettung der Elemente nebeneinander und im Versatz zueinander ergibt.

Das einzelne, in Fig. 5 räumlich wiedergegebene Federelement 4 besteht aus einem geschlossenen, endlosen Kunststoffband 4a mit nach innen weisenden Stegen 5, die rohrförmige Fixierungen 6 tragen, durch die in der Gebrauchslage die Kopplungsstangen 3 hindurchgeführt sind.

Wie sich beispielsweise aus Fig. 6 ergibt, sind dabei die rohrförmigen Fixierkörper 6 etwa in den Ellypsenbrennpunkten angeordnet.

Das Kunststoffband 4a variiert in seiner Breite. So ist es im Bereich größten Krümmungsradius am breitesten, wie sich aus der Aufsicht aus Fig. 8 ergibt, und verjüngt sich zu den Ecken kleineren Krümmungsradius, wie sich dies aus Fig. 7 ergibt. Die rohrförmigen Fixierungen 6 haben im entsprechend dargestellten Beispiel eine Längenausdehnung, die dem breitesten Maß des Kunststoffbandes 4a entspricht, derart, daß beim Koppeln benachbarter Elemente sich eine geschlossene Kettenstruktur erreichen läßt.

Natürlich ist das beschriebene Ausführungsbeispiel der Erfindung noch in vielfacher Hinsicht abzuändern, ohne den Grundgedanken zu verlassen. So kann insbesondere der Querschnitt der einzelnen Federelemente von der dargestellten ellyptischen Form abweichen, er kann stärker gekrümmt bzw. der Kreisform angenähert sein, ggf. auch vollständig querschnittlich kreisförmig, die rohrförmigen Fixierungen können auch als Clipse ausgebildet sein u. dgl. mehr.

## Patentansprüche

1. Matratze (1) mit einem Kern (2) aus einer Mehrzahl von Federelementen (4), wobei jedes Federelement (4) als im wesentlichen kreisförmig oder oval gebogenes, umlaufendes endloses Band aus einem ein Federverhalten aufweisenden Kunststoff gebildet ist,
**dadurch gekennzeichnet,**
**daß** jedes Federelement (4) mit zwei nach innen weisenden Fixierungen (6) zur Aufnahme von Kopplungsstangen (3) oder -rohren versehen ist, wobei zur Bildung des Matratzenkernes (2) die Federelemente (4) in abwechselnder Folge auf je zwei Kopplungsstangen (3) aufgesteckt sind.

2. Matratze nach Anspruch 1,
**dadurch gekennzeichnet,**
**daß** die Fixierungen (6) als die Kopplungsstangen (3) umschließende Rohrkörper ausgebildet sind.

3. Matratze nach Anspruch 1 oder 2,
**dadurch gekennzeichnet,**
**daß** bei einem querschnittlich ovalen Federkörper (4) die Fixierungen etwa in den Ellypsenbrennpunkten vorgesehen sind.

4. Matratze nach einem der vorangegangenen Ansprüche,
**dadurch gekennzeichnet,**
**daß** die Breite des den Federkörper (4) bildenden Kunststoffbandes (4a) von der Mitte des Bereiches größten Krümmungsradius bis zur Mitte des Bereiches kleineren Radius abnimmt.

5. Matratze nach einem der vorangegangenen Ansprüche,
**dadurch gekennzeichnet,**
**daß** die Fixierungen (6) in ihrer Längsausdehnung der größten Bandbreite des Federbandes (4a) entsprechen.
